# FASCICULE DE BREVET EUROPEEN

(11) **EP 2 176 167 B1**
(45) Date de publication et mention de la délivrance du brevet: **14.03.2018**
(21) Numéro de dépôt: 08802939.2
(22) Date de dépôt: 20.06.2008
(51) Int. Cl.: B82Y 30/00, C09C 1/36, C09C 1/40, C08J 3/20, C08J 3/205, C09C 3/10, C09C 1/30, C08J 3/215, H01M 8/10, H01M 8/1023, H01M 8/1034, H01M 8/1039, H01M 8/1044, H01M 8/1051, H01M 8/106, H01M 8/1072

(54) **MATERIAU COMPOSITE POUR MEMBRANE DE PILE A COMBUSTIBLE A BASE DE PARTICULES INORGANIQUES ORGANOMODIFIEES ET PROCEDE DE PREPARATION DE CEUX-CI**
VERBUNDSTOFF FÜR EINE BRENNSTOFFZELLENMEMBRAN AUF BASIS ORGANOMODIFIZIERTER ANORGANISCHER PARTIKEL UND VERFAHREN ZU SEINER HERSTELLUNG
COMPOSITE FOR FUEL CELL MEMBRANE BASED ON ORGANOMODIFIED INORGANIC PARTICLES AND A PROCESS FOR PREPARING SAME

(30) Priorité: 22.06.2007 FR 0755957
(43) Date de publication de la demande: 21.04.2010
(73) Titulaire: Commissariat à l'Énergie Atomique et aux Énergies Alternatives, 75015 Paris (FR)
(72) Inventeur: NIEPCERON, Frédérick, F-37000 Tours (FR); GALIANO, Hervé, F-37700 LA VILLE AUX DAMES FRANCE (FR); TASSIN, Jean-François, F-72360 Change (FR)
(74) Mandataire: Ilgart, Jean-Christophe
(86) Numéro de dépôt international: PCT/EP2008/057902
(87) Numéro de publication internationale: WO 2009/000779

(56) Documents cités:
- WO-A-00/23510
- WO-A-2005/101552

## Description

### DOMAINE TECHNIQUE

La présente invention se rapporte à des matériaux composites comprenant des particules inorganiques greffées par des polymères comportant des groupes acides échangeurs de protons, ces matériaux composites pouvant être utilisés en tant que membranes de piles à combustible.

Ces particules incluses dans les matériaux ont pour caractéristique essentielle de présenter une capacité d'échange ionique particulièrement élevée. De ce fait, ces particules trouvent leur application dans l'élaboration de matériaux conducteurs protoniques, en particulier de matériaux destinés à entrer dans la constitution de membranes conductrices de protons pour piles à combustible, telles que les piles fonctionnant à H₂/air ou H₂/O₂ (connu sous l'abréviation PEMFC signifiant « Proton Exchange Membrane Fuel Cell ») ou fonctionnant au méthanol/air (connu sous l'abréviation DMFC signifiant « Direct Methanol Fuel Cell »).

Ainsi, le domaine technique de l'invention peut être défini, de manière générale, comme celui des particules conductrices de protons et des matériaux les contenant.

Plus généralement encore, l'invention se situe dans le domaine des particules conductrices de protons utilisées dans la constitution de membranes pour piles à combustible.

### ÉTAT DE LA TECHNIQUE ANTÉRIEURE

Une pile à combustible est un générateur électrochimique, qui convertit l'énergie chimique d'une réaction d'oxydation d'un combustible en présence d'un comburant en énergie électrique.

Généralement, une pile à combustible comporte une pluralité de cellules électrochimiques montées en série, chaque cellule comprenant deux électrodes de polarité opposée séparées par une membrane échangeuse de protons faisant office d'électrolyte solide.

La membrane assure le passage vers la cathode des protons formés lors de l'oxydation du combustible à l'anode.

Les membranes structurent le coeur de la pile et doivent, par conséquent, présenter de bonnes performances en matière de conduction protonique, ainsi qu'une faible perméabilité aux gaz réactants (H₂/air ou H₂/O₂ pour les piles PEMFC et méthanol/air pour les piles DMFC). Les propriétés des matériaux constituant les membranes sont essentiellement la stabilité thermique, la résistance à l'hydrolyse et à l'oxydation ainsi qu'une certaine flexibilité mécanique.

Des membranes utilisées couramment et remplissant ces exigences sont des membranes obtenues à partir de polymères appartenant, par exemple, à la famille des polysulfones, des polyéthercétones, des polyphénylènes. Toutefois, il a été constaté, que ces polymères non fluorés se dégradent relativement rapidement dans un environnement de pile à combustible et leur durée de vie reste, pour le moment, insuffisante pour l'application PEMFC.

Des membranes présentant des propriétés plus importantes en matière de durée de vie sont des membranes obtenues à partir de polymères constitués d'une chaîne principale linéaire perfluorée et de chaînes latérales porteuses d'un groupe acide, tel que des groupes acide sulfonique. Parmi les plus connues, on peut citer les membranes commercialisées sous la dénomination NAFION® par la société Dupont de Nemours ou sous la dénomination Dow®, FLEMION® ou Aciplex par les sociétés Dow Chemicals et Asahi Glass. Ces membranes présentent de bonnes performances électrochimiques et une durée de vie intéressante mais néanmoins insuffisante pour les applications PEMFC. De plus, leur coût (plus de 500 euros/m²) reste prohibitif pour la commercialisation. Pour les applications DMFC, elles présentent une perméabilité au méthanol élevée, ce qui limite également leur utilisation avec ce type de combustible. Qui plus est, les monomères les constituant présentent une structure de type hydrophile/hydrophobe, qui les rend particulièrement sensibles aux phénomènes d'hydratation et de déshydratation. Ainsi, leur température de fonctionnement se situe typiquement vers 80°C, puisque au-delà les instabilités d'hydratation vieillissent prématurément les membranes.

Un réel besoin existait donc de stabiliser la conduction protonique de ces membranes autour de 100°C. Pour ce faire, certains auteurs se sont orientés vers le développement de membranes plus complexes comprenant en plus d'une matrice en polymère organique conducteur, des composés ou particules susceptibles d'apporter une conductivité supplémentaire. Lorsque les particules sont des particules minérales, ces membranes sont désignées notamment par la terminologie « membranes hybrides inorganiques-organiques ».

Ainsi, les brevets US 2005/0227135 et US 2005/0244697 décrivent l'introduction de composés inorganiques hydrophiles, afin d'améliorer le niveau d'hydratation des membranes à haute température (les composés inorganiques étant des agglomérats de particules d'oxydes métalliques ou de phosphates métalliques pour US 2005/0227135 ou des matériaux échangeurs de cations à base d'argile pour US 2005/0244697). Le document WO00/23510 A1 décrit des particules poreuses de silice revêtues avec une résine comme des matériaux polymériques ayant des propriétés d'échangeur ionique, par exemple du Nafion®, un polytetrafluoroethylene sulfoné. Les particules de silice peuvent être dispersées dans une matrice de polymères comprise dans un matériau composite conducteur de protons utilisé pour les membranes de pile à combustible. Un polymère conducteur de protons est choisi comme ladite matrice, par exemple un polymère perfluoré sulfoné ou un polymère aromatique ou hétérocyclique porteur de fonctions acides choisies parmi -PO₃H₂, -COOH, -SO₃H. La matrice peut contenir en outre un polymère non conducteur de protons.

Le document WO2005/101552 A2 décrit un matériau composite conducteur de protons comprenant des particules d'argiles greffées par des polymères, qui sont dispersées dans une matrice polymère. Néanmoins, même si ces formulations de membranes composites améliorent les conductivités protoniques des membranes autour de 100°C, elles restent insuffisantes pour satisfaire les critères de fonctionnement d'une pile à combustible à ces températures. Qui plus est, les matrices polymères accueillant ces composés inorganiques présentent déjà un bon niveau de conduction protonique.

Il existe donc un réel besoin en matière de matériaux composites à base de particules conductrices de protons, qui puissent présenter une bonne conduction protonique, laquelle puisse être ajustée et les particules pouvant être incorporées dans une large palette de matériaux, en particulier dans des matériaux présentant peu ou pas de propriétés de conduction protonique.

### EXPOSÉ DE L'INVENTION

Ainsi l'invention a trait, selon un premier objet, à des matériaux composites conducteurs de protons comprenant une matrice polymère en polymère(s) non conducteur(s) de protons au sein de laquelle sont dispersées des particules inorganiques, à la surface desquelles sont greffés, par le biais d'une liaison covalente, des polymères comprenant des unités répétitives comprenant au moins un groupe acide échangeur de protons, éventuellement sous forme de sels, ou un groupe précurseur dudit groupe acide, lesdites particules étant choisies parmi les particules d'oxydes choisis parmi la silice, l'alumine, la zircone, l'oxyde de titane. Grâce au greffage de polymères tels que mentionnés ci-dessus, il est possible d'augmenter, de façon significative, la capacité d'échange ionique, laquelle est directement liée au nombre de groupes acides échangeurs de protons présents dans la chaîne polymérique. Il est ainsi possible d'envisager l'utilisation de ces particules comme charges dans des matériaux ne présentant pas de propriétés de conduction protonique, afin de conférer aux matériaux résultants une conduction protonique. Par ailleurs, il sera possible d'ajuster le niveau de conduction protonique des matériaux les incorporant, en contrôlant le nombre d'unités répétitives comprenant des groupes acides échangeurs de protons présents dans les polymères greffés à la surface des particules (ce contrôle pouvant être effectué aisément en jouant sur la quantité de monomères introduite lors de la fabrication des particules).

Par polymère, on entend, au sens de l'invention, un composé comprenant au moins deux unités répétitives issues de la polymérisation d'un ou plusieurs monomères tels que définis ci-dessous.

Par unité répétitive, on entend un groupe bivalent issu d'un monomère après polymérisation de celui-ci.

Par sel, on entend, au sens de l'invention, les composés de structure ionique résultant de l'action d'une base minérale sur le ou les protons labiles des groupes acides échangeurs de protons.

Par greffage, on entend classiquement l'immobilisation des polymères à la surface des particules inorganiques par le biais d'une liaison covalente entre lesdits polymères et lesdites particules.

A titre de groupe échangeur de protons, on peut citer -PO₃H₂, -CO₂H, -SO₃H, éventuellement sous forme de sels.

Par groupe précurseur d'un groupe acide échangeur de protons, on entend un groupe chimique susceptible d'être transformé par une réaction chimique appropriée en un groupe acide échangeur de protons tel que -CO₂H. A titre d'exemples de groupes précurseurs d'un groupe -CO₂H, on peut citer un groupe ester, chlorure d'acide susceptibles d'être transformés en groupe -CO₂H par hydrolyse acide, ou encore un groupe - CH- (par exemple, compris dans un cycle benzène) susceptible d'être transformé en groupe carboxyle par une réaction de carboxylation.

Comme mentionné ci-dessus, les particules inorganiques sont choisies parmi des particules d'oxydes choisis parmi la silice, l'alumine, la zircone, l'oxyde de titane, greffées par des polymères tels que définis ci-dessus.

En particulier, les particules inorganiques peuvent être des particules de silice greffées par des polymères tels que définis ci-dessus.

Avantageusement, les particules sont des particules hydrophiles comportant à leur surface des groupes hydrophiles, tels que des groupes -OH. Avantageusement, les particules inorganiques peuvent être des particules poreuses.

Les unités répétitives susmentionnées peuvent être issues de la polymérisation de monomères vinyliques, c'est-à-dire de monomères comprenant au moins un groupe éthylénique (ou liaison double carbone-carbone), lesquels monomères présentent un groupe échangeur de protons, soit sous leur forme acide, soit sous leur forme basique (c'est-à-dire sous forme de sels) ou encore un groupe apte, par une réaction appropriée, à se transformer en groupe échangeur de protons.

Des groupes acides échangeurs de protons peuvent être des groupes -SO₃H, -PO₃H₂ et -CO₂H, éventuellement sous forme de sels.

Parmi les monomères vinyliques susceptibles d'être utilisés, on peut citer l'acide vinylsulfonique, l'acide vinylphosphonique, l'acide vinylacétique et leurs sels.

Parmi les monomères vinyliques susceptibles d'être utilisés, on peut citer également des monomères styréniques, tels que l'acide 4-vinylbenzoïque, l'acide 3-vinylbenzoïque, l'acide 4-vinylbenzènesulfonique, l'acide 3-vinylbenzènesulfonique, l'acide 4-vinylbenzènephosphonique, l'acide 3-vinylbenzènephosphonique et l'acide 4-vinylbenzèneméthylphosphonique et leurs sels.

Les monomères vinyliques susceptibles d'être utilisés peuvent être également des monomères fluorés, c'est-à-dire des monomères dont un ou plusieurs atomes d'hydrogène sont substitués par des atomes de fluor. On peut citer, à titre d'exemple, des monomères vinyliques fluorés comprenant au moins un groupe -SO₃H.

Il peut être envisageable, que les polymères greffés comprennent, outre les unités répétitives issues de la polymérisation des monomères porteurs de groupes échangeurs de protons, des unités répétitives issues de la polymérisation de monomères ne comprenant pas de tels groupes.

Des particules conformes à l'invention peuvent être des particules de silice greffées par des polymères issus de la polymérisation du 4-vinylbenzènesulfonate de sodium (ou sel de sodium de l'acide 4-vinylbenzènesulfonique), présentant avantageusement une capacité d'échange protonique supérieure à 1 méq/g, les polymères comprenant avantageusement plus de deux unités répétitives. En particulier, des particules présentant des polymères comprenant de 10 à 20 unités répétitives issues de la polymérisation du 4-vinylbenzènesulfonate de sodium peuvent présenter une capacité d'échange protonique de l'ordre de 3 méq/g.

Les particules incorporées dans les matériaux de l'invention peuvent être préparées par les procédés décrits ci-dessous.

Ainsi, selon un premier mode de réalisation, les particules peuvent être préparées par un procédé de préparation comprenant les étapes suivantes :
- une étape de fonctionnalisation de particules inorganiques, dans laquelle l'on met en contact lesdites particules avec une solution comprenant un premier composé comprenant au moins un groupe apte à se greffer à la surface desdites particules et au moins un groupe apte à initier une réaction de polymérisation avec un précurseur d'un polymère comprenant des unités répétitives comprenant au moins un groupe acide échangeur de protons, éventuellement sous forme de sels, ou un groupe précurseur dudit groupe acide ;
- une étape de mise en contact des particules obtenues à l'issue de la précédente étape avec au moins un précurseur tel que défini ci-dessus ;
- une étape de polymérisation du ou desdits précurseurs.

Lorsque le polymère comprend un groupe précurseur dudit groupe acide, le procédé comprendra, après l'étape de polymérisation, une étape destinée à transformer ledit groupe précurseur en le groupe acide adéquat.

Les particules utilisées dans la première étape sont, comme mentionné ci-dessus, des particules étant des particules d'oxydes choisis parmi la silice, l'alumine, la zircone, l'oxyde de titane. Avantageusement, les particules sont des particules hydrophiles comportant à leur surface des groupes hydrophiles, tels que des groupes -OH. Ces particules présentent avantageusement une surface spécifique pouvant aller de 10 à 1000 m²/g. Ainsi, dans une telle gamme de surface spécifique, il est possible de greffer un nombre plus important de chaînes de polymères par rapport à des particules présentant une surface spécifique de l'ordre d'une dizaine de m²/g et par voie de conséquence d'influer ainsi sur la capacité d'échange ionique.

Par groupe apte à se greffer à la surface des particules, on entend un groupe susceptible de réagir avec un groupe présent à la surface des particules, de façon à former une liaison covalente entre le premier composé et les particules.

Les particules inorganiques comportent généralement des groupes -OH à leur surface, résultant classiquement de l'effet de l'humidité de l'atmosphère ambiante.

Dans ce cas, le premier composé comprendra donc un groupe apte à former une liaison covalente, en particulier par réaction avec un groupe -OH, au cours d'une réaction d'hydroxylation, ce groupe pouvant être choisi parmi les groupes de formules suivantes :
- COOR¹ avec R¹ représentant un atome d'hydrogène, un groupe alkyle comprenant de 1 à 30 atomes de carbone ou un groupe phényle ;
- COCl ;
- COCH₂CO-R¹ avec R¹ représentant un atome d'hydrogène, un groupe alkyle comprenant de 1 à 30 atomes de carbone ou un groupe phényle ;
- PO(OH)₂, -PO(OR²)(OH) ou -PO(OR²)(OR³) avec R² et R³, identiques ou différents, représentant un groupe alkyle comprenant de 1 à 30 atomes de carbone ou un groupe phényle ;
- CO(NHOH) ;
- M(OR⁴)ₙ₋ₓ₋₁Zₓ avec x étant un entier allant de 1 à (n-1), M étant un métal ou un métalloïde, n étant un degré d'oxydation de M, R⁴ représentant un atome d'hydrogène, un groupe alkyle comprenant de 1 à 30 atomes de carbone, un groupe phényle, un cation métallique monovalent, ou un groupe de formule N⁺R¹₄, avec R¹ représentant un atome d'hydrogène, un groupe alkyle comprenant de 1 à 30 atomes de carbone, ou un groupe phényle, et Z représente un atome d'hydrogène, un groupe alkyle comprenant de 1 à 30 atomes de carbone, un groupe phényle ou un atome d'halogène ;
- SO₃M' avec M' représentant un atome d'hydrogène, un cation métallique monovalent ou un groupe de formule N⁺R¹₄ avec R¹ représentant un atome d'hydrogène, un groupe alkyle comprenant de 1 à 30 atomes de carbone ou un groupe phényle ;
- B(OM')₂ avec M' représentant un atome d'hydrogène, un cation métallique monovalent ou un groupe de formule N⁺R¹₄ avec R¹ représentant un atome d'hydrogène, un groupe alkyle comprenant de 1 à 30 atomes de carbone ou un groupe phényle ;
- OH ;
et les combinaisons de ceux-ci.

Pour le groupe de formule -M(OR⁴)ₙ₋ₓ₋₁Zₓ telle que définie précédemment, M peut représenter un élément métallique, tel qu'un élément de transition de degré d'oxydation n donné ou un élément métalloïde tel que Si, Ge, Te de degré d'oxydation n donné, les degrés d'oxydation envisageables pour chaque élément métallique ou métalloïde étant connus de l'homme du métier. A titre d'exemple de groupes conformes à cette définition, on peut citer le groupe de formule :
- Si(OR⁴)₃₋ₓZₓ avec x étant un entier allant de 1 à 3, Z et R⁴ ayant les mêmes définitions que celles données ci-dessus.

Plus particulièrement, un groupe approprié peut être un groupe alcoxysilane, tel qu'un groupe triméthoxysilane.

Par groupe apte à initier une réaction de polymérisation, on entend classiquement un groupe à partir duquel il est possible d'initier la croissance d'un polymère par une réaction de polymérisation des précurseurs dudit polymère.

On précise que par précurseur, on entend classiquement un monomère, éventuellement un oligomère, dont la polymérisation conduit au polymère susmentionné.

Un groupe apte à initier une réaction de polymérisation peut être un groupe éthylénique qui, suite à l'action d'un initiateur de polymérisation, peut générer un radical libre par ouverture de la double liaison, à partir duquel va se propager la réaction de polymérisation avec les précurseurs susmentionnés.

Ce groupe apte à initier une réaction de polymérisation peut être également un groupe porteur d'une liaison C-X, qui suite à un clivage homolytique de la liaison entre l'atome de carbone et le groupe X, génère un centre radicalaire C˙, à partir duquel va se propager la réaction de polymérisation avec les précurseurs susmentionnés. Le groupe X peut être notamment un atome d'halogène, un groupe -O-NR₂, un groupe -S-CS-R, R représentant un groupe alkyle comprenant de 1 à 30 atomes de carbone.

Ce premier composé peut être un composé comprenant un groupe éthylénique (en tant que groupe apte à initier une réaction de polymérisation) et comprenant un groupe alcoxysilane (en tant que groupe apte à se greffer à la surface des particules). Un exemple de composé de ce type est le styryléthyltriméthoxysilane, de formule brute C₁₃H₂₀SiO₃, correspondant à la formule développée suivante :

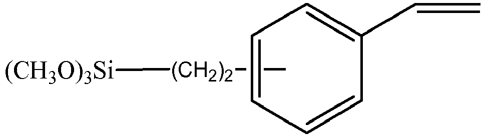

Ce premier composé peut être également un composé comprenant un groupe porteur d'une liaison C-halogène, tel que C-Cl, (en tant que groupe apte à initier la polymérisation) et comprenant un groupe alcoxysilane (en tant que groupe apte à se greffer à la surface des particules). Un exemple de composé de ce type est le chlorométhylphényléthyltriméthoxysilane, de formule brute C₁₂H₁₉ClSiO₃, correspondant à la formule développée suivante :

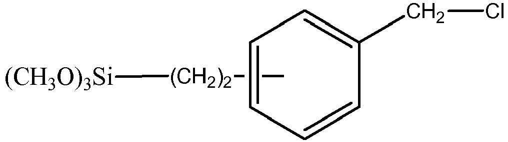

Le procédé comprend ensuite une étape de mise en contact des particules obtenues à l'issue de la précédente étape avec au moins un précurseur apte à réagir avec le groupe apte à initier une réaction de polymérisation dudit premier composé. Les précurseurs envisageables peuvent correspondre aux monomères définis ci-dessus, tel que le 4-vinylbenzènesulfonate de sodium.

Enfin, le procédé comprend une étape de polymérisation du ou desdits monomères, la polymérisation de ces monomères progressant à partir du premier composé greffé préalablement sur lesdites particules.

La polymérisation peut être initiée par ajout d'un initiateur de polymérisation dans le milieu comprenant les particules greffées par le premier composé et les monomères, cet initiateur pouvant être un composé azo (tel que l'azobisisobutyronitrile) notamment lorsque le premier composé comprend un groupe éthylénique en tant groupe apte à initier la polymérisation ou pouvant être un complexe sel métallique-bipyridine (tel qu'un complexe chlorure de cuivre-bipyridine) notamment lorsque le premier composé comprend un groupe C-X tel que défini ci-dessus en tant que groupe apte à initier la polymérisation.

Ce procédé de préparation permet de contrôler la longueur des chaînes de polymères greffées (en jouant sur la quantité introduite de monomères), et donc la capacité d'échange protonique des particules.

Ce procédé est particulièrement adapté à la préparation de particules de silice greffées par du poly(4-vinylbenzènesulfonate de sodium).

Selon une première variante, ce type de particules peut être préparé par un procédé comprenant les étapes suivantes :
- une étape de mise en contact de particules de silice avec une solution comprenant un premier composé comprenant un groupe éthylénique (en tant que groupe apte à initier la polymérisation) et comprenant un groupe alcoxysilane (en tant que groupe apte à se greffer à la surface desdites particules), ce premier composé pouvant être le styryléthyltriméthoxysilane de formule développée telle que définie ci-dessus ;
- une étape de mise en contact des particules obtenues à l'issue de la précédente étape avec le monomère 4-vinylbenzènesulfonate de sodium ;
- une étape de polymérisation dudit monomère à partir du groupe apte à initier une réaction de polymérisation du premier composé.

Selon une deuxième variante, ce type de particules peut être préparé par un procédé comprenant les étapes suivantes :
- une étape de mise en contact de particules de silice avec une solution comprenant un premier composé comprenant un groupe porteur d'une liaison C-halogène (en tant que groupe polymérisable) et comprenant un groupe alcoxysilane (en tant que groupe apte à se greffer à la surface desdites particules), ce premier composé pouvant être le chlorométhylphényléthyltriméthoxysilane de formule développée telle que définie ci-dessus ;
- une étape de mise en contact des particules obtenues à l'issue de la précédente étape avec le monomère 4-benzènesulfonate de sodium ;
- une étape de polymérisation dudit monomère à partir du groupe polymérisable du premier composé.

Selon un deuxième mode de réalisation, les particules incorporées dans les matériaux composites de l'invention peuvent être préparées par un procédé de préparation comprenant les étapes suivantes :
- une étape de polymérisation d'un monomère comprenant au moins un groupe acide échangeur de protons, éventuellement sous forme de sels, ou un groupe précurseur dudit groupe acide, le polymère résultant comprenant au moins un groupe apte à se greffer à la surface de particules inorganiques ;
- une étape de fonctionnalisation desdites particules inorganiques par mise en contact de celles-ci avec une solution comprenant le polymère préparé à l'étape précédente.

Lorsque le polymère comprend des groupes précurseurs des groupes acides échangeurs de protons, le procédé comprendra, après l'étape de fonctionnalisation, une étape de transformation desdits groupes précurseurs en lesdits groupes acides adéquats.

Par exemple, si le polymère comprenant des cycles benzéniques dans ses unités répétitives, il est possible d'envisager une transformation de groupes -CH-desdits cycles en groupes -C-COOH par une réaction de carboxylation.

Les monomères susmentionnés répondent à la même définition que les précurseurs de polymères décrits pour le premier mode de réalisation.

Les groupes aptes à se greffer à la surface des particules inorganiques peuvent être également identiques à ceux décrits pour le premier mode de réalisation.

Les particules de l'invention présentent, comme indiqué plus haut, une conduction protonique de part la nature des polymères greffés à leur surface, laquelle conduction protonique peut être ajustée en jouant sur le nombre d'unités répétitives porteurs d'au moins un groupe échangeur de protons.

Ces particules présentent donc un intérêt tout particulier à entrer dans la constitution de matériaux conducteurs de protons, tels que les membranes de pile à combustible. La matrice polymère est une matrice en polymère (s) non conducteur(s) de protons, auquel cas les particules apporteront des propriétés de conduction protonique au matériau.

De tels polymères peuvent être des polymères fluorés tels que le polytétrafluoroéthylène (PTFE), le polyfluorure de vinylidène (PVDF), le copolymère tétrafluoroéthylène/éthylène (ETFE) et leurs dérivés. Les polymères fluorés ont notamment pour avantage de présenter une bonne tenue mécanique ainsi qu'une bonne résistance chimique.

De tels polymères peuvent être également des polymères aromatiques ou hétérocycliques. On précise que, par polymères aromatiques ou hétérocycliques, on entend un polymère dont la chaîne principale comprend un enchaînement de motifs aromatiques (par exemple, phénylène) ou hétérocycliques (par exemple, benzimidazole). Parmi ces polymères, on peut citer les polysulfones, les polyaryléthercétones, les polyimides, les polybenzimidazoles, les polyoxydes de phénylène, les polycarbonates. De tels polymères ont pour particularité de conférer au matériau composite, dans lequel ils sont intégrés, une rigidité et une résistance chimique et thermique élevées, sans nécessiter l'incorporation au matériau composite d'apport de renfort ou de charge.

Un exemple de matériau composite de ce type peut être un matériau comprenant une matrice en polyfluorure de vinylidène et des particules de silice greffées par du poly(4-vinylbenzènesulfonate de sodium) dispersées dans ladite matrice.

Dans ce cas, les propriétés électrochimiques et conductrices de protons sont apportées uniquement par les particules inorganiques greffées, ce qui représente un apport significatif dans le domaine des matériaux composites conducteurs de protons.

Le matériau composite selon l'invention se présente avantageusement sous forme d'un film, présentant par exemple une épaisseur de 20 à 200 µm.

L'invention concerne également des procédés de préparation d'un matériau composite conducteur de protons tel que défini ci-dessus.

Pour préparer un matériau composite conducteur de protons de l'invention, deux alternatives sont envisageables, selon l'invention.

Selon une première alternative, le procédé comprend successivement les étapes suivantes :
- mélanger, en l'absence de solvant, un ou plusieurs polymères constitutifs de la matrice avec des particules telles que définies ci-dessus ;
- former à partir du mélange obtenu le matériau composite par voie fondue.

En variante, le procédé peut comprendre successivement les étapes suivantes :
- fondre, en l'absence de solvant, un ou plusieurs polymères constitutifs de la matrice ;
- incorporer, dans le polymère ou le mélange de polymères fondus des particules telles que définies ci-dessus.

Selon la première alternative, le traitement thermique comprend généralement une étape de chauffage du mélange obtenu après la première étape à une température pouvant aller de 100°C à 300°C, de manière à obtenir un mélange fondu et une étape simultanée ou consécutive de mise en forme du mélange, afin d'obtenir le matériau composite voulu, cette mise en forme pouvant consister en un calandrage.

Parmi les traitements thermiques par voie fondue appropriés, on peut citer l'extrusion. Dans ce cas, plus précisément, le polymère destiné à former la matrice est introduit dans une extrudeuse, qui le porte à l'état fondu. Les particules sont alors introduites dans l'extrudeuse au niveau du polymère fondu et la vis effectue alors un mélange homogène conduisant, en sortie d'extrudeuse, à un matériau composite dans lequel les particules sont dispersées de façon adéquate pour percoler. L'utilisation d'une filière plate peut permettre d'obtenir directement un film composite mince qui peut être éventuellement acidifié ultérieurement.

Selon une seconde alternative, le procédé comprend successivement les étapes suivantes :
- une étape de mélange d'une solution comprenant des particules telles que définies précédemment et un ou plusieurs solvants avec un ou plusieurs polymères constitutifs de la matrice ;
- une étape de formation, à partir du mélange obtenu, d'un matériau composite par évaporation du ou des solvant(s).

Selon cette seconde alternative, la solution peut être coulée sur un support, par exemple, en verre, en alumine ou encore en polyéthylène, puis le matériau sous forme de film est formé par évaporation du ou des solvants. A l'issue de ce procédé, on obtient un matériau sous forme de film déposé sur le support. Le film obtenu peut être facilement désolidarisé du support, pour donner un film conducteur protonique auto-supporté.

On précise que les solvants susceptibles d'être utilisés dans le cadre de ce procédé peuvent être choisis parmi les solvants polaires aprotiques tels que le N-méthyl-2-pyrrolidinone, le diméthylformamide, le diméthylacétamide, le tétrahydrofurane, le diméthylsiloxane, ou encore des solvants chlorés comme le chloroforme, mais aussi des solvants tels que les alcools, les éthers, l'acétone.

Du fait de leurs propriétés mécaniques, ces matériaux peuvent être mis en oeuvre efficacement et conduire à des films minces suffisamment résistants pour être utilisés comme membranes pour pile à combustible.

Ainsi l'invention a pour objet une membrane pour pile à combustible comprenant un matériau composite conducteur protonique tel que défini ci-dessus.

Ces membranes se présentent avantageusement sous la forme de films minces, ayant, par exemple, une épaisseur de 20 à 200 micromètres.

Ces membranes présentent avantageusement une imperméabilité suffisante aux gaz réactants (tels que H₂ et O₂) et sont stables, de préférence, jusqu' à une température d'au moins 150°C.

De préférence, le matériau composite constitutif de la membrane comprend de 0,5 à 50% en poids de particules telles que définies précédemment par rapport au poids total du matériau, lorsque la matrice de polymère comprend un ou plusieurs polymères conducteurs de protons.

De préférence, le matériau composite constitutif de la membrane comprend de 5 à 80% en poids de particules telles que définies précédemment par rapport au poids total du matériau, lorsque la matrice polymère comprend un ou plusieurs polymères non conducteurs de protons.

On précise que les % ci-dessus sont exprimés par rapport au poids total du matériau composite.

Les membranes de l'invention sont préparées par des procédés identiques à ceux définis ci-dessus pour le matériau composite conducteur protonique.

Les membranes tels que définies ci-dessus peuvent être avantageusement incorporées dans des dispositifs de pile à combustible.

Ainsi, l'invention a trait également à un dispositif comprenant au moins un assemblage électrode-membrane-électrode, dans lequel la membrane est telle que définie ci-dessus.

Le dispositif de pile à combustible comprend généralement plusieurs assemblages électrode-membrane-électrode.

Pour préparer un tel assemblage, la membrane peut être placée entre deux électrodes, par exemple en tissu ou en papier de carbone imprégné d'un catalyseur. L'ensemble formé de la membrane disposée entre les deux électrodes est ensuite pressé à une température adéquate afin d'obtenir une bonne adhésion électrode-membrane.

L'assemblage électrode-membrane-électrode est ensuite placé entre deux plaques assurant la conduction électrique et l'alimentation en réactifs aux électrodes. Ces plaques sont communément désignées par le terme de plaques bipolaires.

L'invention va maintenant être décrite en référence aux exemples suivants, donnés à titre illustratif et non limitatif.

### EXPOSÉ DÉTAILLÉ DE MODES DE RÉALISATION PARTICULIERS

### EXEMPLE 1

Cet exemple illustre la préparation de particules de silice greffées par des oligomères issus de la polymérisation du 4-vinylbenzènesulfonate de sodium.

Une suspension de 4 g de particules de silice présentant un diamètre de particules de 7 nm dans 300 mL de toluène est mise à reflux sous agitation magnétique et sous ultrasons pendant 1 heure. 4 mL de styryléthyltriméthoxysilane (commercialisé par la société Aldrich) et de formule développée telle que représentée dans la description est additionné à la suspension. La réaction est laissée sous agitation à reflux pendant 4 heures. Les particules sont alors récupérées et lavées à l'éthanol, afin d'éliminer l'alcoxysilane non greffé. La poudre obtenue est alors séchée sous vide à 100°C pendant 24 heures.

Les particules de silice fonctionnalisées par le groupement styrylvinylique sont dispersées sous ultrasons dans le diméthylformamide (80 mL) avant d'ajouter le 4-vinylbenzènesulfonate de sodium (7 g) à la suspension. Le mélange réactionnel est laissé sous agitation pendant 24 heures à température ambiante, afin d'obtenir un mélange homogène. L'azo-bis-isobutyronitrile (54 mg) est ensuite additionné au mélange, qui est alors porté à 80°C. La polymérisation des monomères s'effectue sous argon pendant 21 heures. Après retour à température ambiante, les particules fonctionnalisées sont isolées et lavées à l'eau ultrapure, afin d'éliminer les monomères n'ayant pas réagi ainsi les oligomères et les polymères non greffés sur les particules. La poudre obtenue est ensuite séchée à 100°C pendant 24 heures sous vide. L'analyse élémentaire des particules fonctionnalisées conduit à un taux de soufre de 5% correspondant à une capacité d'échange ionique de 1,6 méq/g pour ces particules.

### EXEMPLE 2

Cet exemple illustre la préparation de particules de silice greffées par des oligomères issus de la polymérisation du 4-vinylbenzènesulfonate de sodium.

Une suspension de 15,2 g de particules de silice présentant un diamètre de 7 nm dans 1L de toluène est mise à reflux sous agitation mécanique et ultrasons pendant 1 heure. Après addition de 25 mL de chlorométhylphényléthyltriméthoxysilane de formule développée conforme à la description, le mélange est laissé à réagir pendant 4 heures à reflux. Les particules ainsi fonctionnalisées sont ensuite isolées et lavées à l'éthanol, afin d'éliminer le chlorométhylphényltriméthoxysilane non greffé ainsi que les produits d'hydrolyse. La poudre obtenue est séchée sous vide à 100°C pendant 24 heures.

Les particules fonctionnalisées sont ensuite dispersées dans un mélange eau/méthanol (3/1) avant d'ajouter le 4-vinylbenzènesulfonate de sodium à raison de 0,49 mol/L. Le mélange réactionnel est homogénéisé sous agitation pendant 24 heures, avant d'ajouter le chlorure de cuivre et la bipyridine (0,041 M/0,082 M), afin d'amorcer la polymérisation. Après 21 heures de polymérisation sous argon, les particules fonctionnalisées sont isolées et lavées avec une solution aqueuse d'EDTA, afin d'éliminer les ions cuivre et les monomères non greffés sur les particules. La poudre obtenue est ensuite séchée sous vide à 100°C pendant 24 heures. L'analyse élémentaire des particules conduit à un taux de soufre de 8,6% correspondant à une capacité d'échange ionique de 2,7 méq/g pour ces particules.

### EXEMPLE 3

Cet exemple illustre la préparation de membranes nanocomposites par voie solvant.

Pour ce faire, une suspension de 0,4 g de particules fonctionnalisées dans 12,1 g de diméthylformamide est homogénéisée sous agitation mécanique pendant 13 heures, avant d'y ajouter 1,9 g de polyfluorure de vinylidène. Le mélange est alors homogénéisé sous agitation magnétique pendant 70 heures supplémentaires. Le mélange homogène est ensuite coulé sur une plaque de verre horizontale et l'épaisseur du film liquide est uniformisée par le passage d'un applicateur calibré à 500 µm. Après séchage du film sous une hotte à flux laminaire, le film composite est aisément décollé de son support par immersion dans l'eau. L'épaisseur de la membrane est de 70 µm.

### EXEMPLE 4

Après un traitement d'activation des membranes, qui permet de générer ou régénérer les groupements -SO₃H, le matériau nanocomposite est caractérisé en terme de conductivité protonique. Les mesures de conductivité protonique sont déterminées par spectroscopie d'impédance complexe en utilisant un banc d'acquisition, formé d'un analyseur de fréquence (Solartron SI 1255) couplé à une cellule de mesure munie de 2 électrodes de platine (Surface électrode Pt=0,5 cm). Les mesures sont réalisées dans une enceinte climatique, afin de fixer le taux d'humidité et la température lors des essais.

La conductivité obtenue par une membrane hybride de PVDF chargée à 30% de silice sulfonée selon l'invention (exemple 3, particules présentant une CEI de 2,7 méq/g) est de 2.10⁻² S/cm. En comparaison, une membrane hybride nanocomposite de PSU (polysulfone non conducteur protonique) chargée à 30% de silice sulfonée greffée par des groupes de formule -(CH₂)₃-SO₃H (présentant une CEI de 2,3 méq/g), la conductivité obtenue est de 1.10⁻² S/cm (les mesures de conductivité étant réalisées à température ambiante 25°C avec un taux d'humidité de 98%).

La conductivité obtenue par une membrane hybride nanocomposite de PVDF chargée à 40% de silice sulfonée conforme à l'invention (exemple 3, particules de silice présentant une CEI de 2,7 méq/g) est de 3.10⁻² S.cm⁻¹, en comparaison, une membrane de Nafion® 115 présente une conductivité de 2.10⁻² S.cm⁻¹ (à une température de 25°C et une RH de 98%).

Ces résultats valident le concept d'une conduction protonique au sein d'une membrane hybride nanocomposite par le seul biais des particules inclus dans la membrane.

## Revendications

1. Matériau composite conducteur de protons comprenant une matrice polymère en polymère(s) non conducteur(s) de protons au sein de laquelle sont dispersées des particules inorganiques, à la surface desquelles sont greffés, par le biais d'une liaison covalente, des polymères comprenant des unités répétitives comprenant au moins un groupe acide échangeur de protons, éventuellement sous forme de sels, ou un groupe précurseur dudit groupe acide, lesdites particules étant des particules d'oxydes choisis parmi la silice, l'alumine, la zircone, l'oxyde de titane.

2. Matériau composite selon la revendication 1, dans lequel les particules sont des particules de silice.

3. Matériau composite selon l'une quelconque des revendications précédentes, dans lequel le groupe acide échangeur de protons est choisi parmi -PO₃H₂, -CO₂H, -SO₃H.

4. Matériau composite selon l'une quelconque des revendications précédentes, dans lequel les particules sont des particules hydrophiles comportant à leur surface des groupes hydrophiles, tels que des groupes -OH.

5. Matériau composite selon l'une quelconque des revendications précédentes, dans lequel les particules sont des particules poreuses.

6. Matériau composite selon l'une quelconque des revendications précédentes, dans lequel les unités répétitives sont issues de la polymérisation de monomères vinyliques présentant au moins un groupe acide échangeur de protons, éventuellement sous forme de sels.

7. Matériau composite selon la revendication 6, dans lequel les monomères vinyliques sont choisis parmi l'acide vinylsulfonique, l'acide vinylphosphonique, l'acide vinylacétique et leurs sels.

8. Matériau composite selon la revendication 6, dans lequel les monomères vinyliques sont des monomères styréniques choisis parmi l'acide 4-vinylbenzoïque, l'acide 3-vinylbenzoïque, l'acide 4-vinylbenzènesulfonique, l'acide 3-vinylbenzènesulfonique, l'acide 4-vinylbenzènephosphonique, l'acide 3-vinylbenzènephosphonique, l'acide 4-vinylbenzèneméthylphosphonique et leurs sels.

9. Matériau composite selon la revendication 6, dans lequel les monomères vinyliques sont des monomères fluorés.

10. Matériau composite selon l'une quelconque des revendications 1 à 6, dans lequel les particules sont des particules de silice greffées par des polymères issus de la polymérisation du 4-vinylbenzènesulfonate de sodium.

11. Matériau composite selon l'une quelconque des revendications précédentes, dans lequel le polymère non conducteur de protons est un polymère fluoré.

12. Matériau composite selon la revendication 11, dans lequel le polymère fluoré est choisi parmi le polytétrafluoroéthylène (PTFE), le polyfluorure de vinylidène (PVDF), le copolymère tétrafluoroéthylène/éthylène (ETFE).

13. Matériau composite selon la revendication 1, dans lequel le polymère non conducteur de protons est un polymère aromatique ou hétérocyclique.

14. Matériau composite selon la revendication 13, dans lequel le polymère aromatique ou hétérocyclique est choisi parmi les polysulfones, les polyaryléthercétones, les polyimides, les polybenzimidazoles, les polyoxydes de phénylène, les polycarbonates.

15. Procédé de préparation d'un matériau composite tel que défini selon l'une quelconque des revendications 1 à 14, comprenant successivement les étapes suivantes :
- mélanger, en l'absence de solvant, un ou plusieurs polymères constitutifs de la matrice avec des particules telles que définies selon l'une quelconque des revendications 1 à 14 ;
- former à partir du mélange obtenu le matériau composite par voie fondue.

16. Procédé de préparation d'un matériau composite tel que défini selon l'une quelconque des revendications 1 à 14, comprenant successivement les étapes suivantes :
- une étape de mélange d'une solution comprenant des particules telles que définies selon l'une quelconque des revendications 1 à 14 et un ou plusieurs solvants avec un ou plusieurs polymères constitutifs de la matrice ;
- une étape de formation, à partir du mélange obtenu, d'un matériau composite par évaporation du ou des solvant(s).

17. Membrane de pile à combustible comprenant un matériau composite conducteur tel que défini selon l'une quelconque des revendications 1 à 14.

18. Membrane de pile à combustible selon la revendication 17, se présentant sous forme d'un film d'épaisseur allant de 20 à 200 micromètres.

19. Dispositif de pile à combustible comprenant au moins un assemblage électrode-membrane-électrode, dans lequel la membrane est telle que définie selon la revendication 17 ou 18.

## Patentansprüche

1. Protonenleitender Verbundstoff, umfassend eine Polymermatrix aus nicht protonenleitendem(n) Polymer(en), in der anorganische Partikel dispergiert sind, auf deren Oberfläche durch eine kovalente Verbindung Polymere gepfropft sind, umfassend repetitive Einheiten, umfassend mindestens eine saure Protonenaustauschgruppe eventuell in Form von Salzen oder eine Vorläufergruppe der sauren Gruppe, wobei die Partikel Oxidpartikel sind, die unter Siliziumoxid, Aluminiumoxid, Zirkon, Titanoxid ausgewählt sind.

2. Verbundstoff nach Anspruch 1, bei dem die Partikel Siliziumoxidpartikel sind.

3. Verbundstoff nach einem der vorhergehenden Ansprüche, bei dem die saure Protonenaustauschgruppe ausgewählt ist unter -PO₃H₂, -CO₂H, -SO₃H.

4. Verbundstoff nach einem der vorhergehenden Ansprüche, bei dem die Partikel hydrophile Partikel sind, umfassend an ihrer Oberfläche hydrophile Gruppen, wie -OH-Gruppen.

5. Verbundstoff nach einem der vorhergehenden Ansprüche, bei dem die Partikel poröse Partikel sind.

6. Verbundstoff nach einem der vorhergehenden Ansprüche, bei dem die repetitiven Einheiten aus der Polymerisation von Vinylmonomeren, die mindestens eine saure Protonenaustauschgruppe eventuell in Form von Salzen aufweisen, hervorgegangen sind.

7. Verbundstoff nach Anspruch 6, bei dem die Vinylmonomere unter der Vinylsulfonsäure, der Vinylphosphonsäure, der Vinylessigsäure und ihren Salzen ausgewählt sind.

8. Verbundstoff nach Anspruch 6, bei dem die Vinylmonomere Styrolmonomere sind, ausgewählt unter der 4-Vinylbenzoesäure, der 3-Vinylbenzoesäure, der 4-Vinylbenzolsulfonsäure, der 3-Vinylbenzolsulfonsäure, der 4-Vinylbenzolphosphonsäure, der 3-Vinylbenzolphosphonsäure, der 4-Vinylbenzolmethylphosphonsäure und ihren Salzen.

9. Verbundstoff nach Anspruch 6, bei dem die Vinylmonomere fluorhaltige Monomere sind.

10. Verbundstoff nach einem der Ansprüche 1 bis 6, bei dem die Partikel Siliziumoxidpartikel sind, die mit Polymeren gepfropft sind, die von der Polymerisation des Natrium-4-Vinylbenzolsulfonats stammen.

11. Verbundstoff nach einem der vorhergehenden Ansprüche, bei dem das nicht protonenleitende Polymer ein fluorhaltiges Polymer ist.

12. Verbundstoff nach Anspruch 11, bei dem das fluorhaltige Polymer unter dem Polytetrafluorethylen (PTFE), dem Vinylidenpolyfluorid (PVDF), dem Copolymer Tetrafluorethylen/Ethylen (ETFE) ausgewählt ist.

13. Verbundstoff nach Anspruch 1, bei dem das nicht protonenleitende Polymer ein aromatisches oder heterozyklisches Polymer ist.

14. Verbundstoff nach Anspruch 13, bei dem das aromatische oder heterozyklische Polymer ausgewählt ist unter den Polysulfonen, den Polyaryletherketonen, den Polyimiden, den Polybenzimidazolen, den Phenylenpolyoxiden, den Polykarbonaten.

15. Verfahren zur Herstellung eines Verbundstoffes, wie nach einem der Ansprüche 1 bis 14 definiert, nacheinander umfassend die folgenden Schritte:
- ohne Lösungsmittel Mischen eines oder mehrerer die Matrix bildender Polymere mit Partikeln, wie nach einem der Ansprüche 1 bis 14 definiert;
- aus dem erhaltenen Gemisch Bilden des Verbundstoffes durch Schmelzen.

16. Verfahren zur Herstellung eines Verbundstoffes, wie nach einem der Ansprüche 1 bis 14 definiert, umfassend nacheinander die folgenden Schritte:
- einen Schritt des Mischens einer Lösung, umfassend Partikel, wie nach einem der Ansprüche 1 bis 14 definiert, und eines oder mehrerer Lösungsmittel mit einem oder mehreren die Matrix bildenden Polymeren;
- einen Schritt der Bildung eines Verbundstoffes aus dem erhaltenen Gemisch durch Verdampfen des oder der Lösungsmittel(s).

17. Brennstoffzellmembran, umfassend einen leitenden Verbundstoff, wie nach einem der Ansprüche 1 bis 14 definiert.

18. Brennstoffzellmembran nach Anspruch 17, die in Form einer Folie mit einer Dicke von 20 bis 200 Mikrometer vorhanden ist.

19. Brennstoffzellenvorrichtung, umfassend mindestens eine Elektrode-Membran-Elektrode-Einheit, bei der die Membran wie nach Anspruch 17 oder 18 definiert ist.

## Claims

1. Proton conducting composite material comprising a polymer matrix made from proton nonconducting polymer(s) in which inorganic particles are dispersed, on the surface whereof polymers are grafted via a covalent bond, said polymers comprising repetitive units comprising at least one proton exchange acid group, optionally in the form of salts, or a precursor group of the said acid group, the said particles being selected from particles of oxides chosen from silica, alumina, zirconia, titanium oxide

2. Composite material according to Claim 1, in which the particles are silica particles.

3. Composite material according to any one of the preceding claims, in which the proton exchange acid group is selected from -PO₃H₂, -CO₂H, -SO₃H.

4. Composite material according to any one of the preceding claims, in which the particles are hydrophilic particles comprising hydrophilic groups, such as -OH groups, on their surface.

5. Composite material according to any one of the preceding claims, in which the particles are porous particles.

6. Composite material according to any one of the preceding claims, in which the repetitive units are obtained by the polymerisation of vinyl monomers having at least one proton exchanger acid group, optionally in the form of salts.

7. Composite material according to Claim 6, in which the vinyl monomers are selected from vinylsulphonic acid, vinylphosphonic acid, vinylacetic acid and salts thereof.

8. Composite material according to Claim 6, in which the vinyl monomers are styrene monomers selected from 4-vinylbenzoic acid, 3-vinylbenzoic acid, 4-vinylbenzenesulphonic acid, 3-vinylbenzenesulphonic acid, 4-vinylbenzenephosphonic acid, 3-vinylbenzenephosphonic acid, 4-vinyl-benzenemethylphosphonic acid and salts thereof.

9. Composite material according to Claim 6, in which the vinyl monomers are fluorinated monomers.

10. Composite material according to any one of Claims 1 to 6, in which the particles are silica particles grafted by polymers obtained by the polymerisation of sodium 4-vinylbenzenesulphonate.

11. Composite material according to any one of the preceding claims, in which the proton nonconducting polymer is a fluorinated polymer.

12. Composite material according to Claim 11, in which the fluorinated polymer is selected from polytetrafluoroethylene (PTFE), polyvinylidene fluoride (PVDF), ethylene/tetrafluoroethylene copolymer (ETFE).

13. Composite material according to Claim 1, in which the proton nonconducting polymer is an aromatic or heterocyclic polymer.

14. Composite material according to Claim 13, in which the aromatic or heterocyclic polymer is selected from polysulphones, polyaryletherketones, polyimides, polybenzimidazoles, phenylene polyoxides, polycarbonates.

15. Method for preparing a composite material according to any one of Claims 1 to 14, successively comprising the following steps:
- in the absence of solvent, mixing one or more polymers constituting the matrix with particles according to any one of Claims 1 to 14;
- from the mixture obtained, forming the composite material by melting.

16. Method for preparing a composite material according to any one of Claims 1 to 14, successively comprising the following steps:
- mixing a solution comprising particles according to any one of Claims 1 to 14 and one or more solvents with one or more polymers constituting the matrix;
- from the mixture obtained, forming a composite material by evaporation of the solvent(s).

17. Fuel cell membrane comprising a conducting composite material according to any one of Claims 1 to 14.

18. Fuel cell membrane according to Claim 17, in the form of a film between 20 and 200 microns thick.

19. Fuel cell device comprising at least one electrode-membrane-electrode assembly, containing a membrane according to either of Claims 17 and 18.
